# FASCICULE DE BREVET EUROPEEN

(11) **EP 4 581 201 B1**
(45) Date de publication et mention de la délivrance du brevet: **30.09.2026**
(21) Numéro de dépôt: 23772552.8
(22) Date de dépôt: 30.08.2023
(51) Int. Cl.: D03D 11/00, D03D 13/00, D03D 15/25, D03D 25/00, B29B 11/16

(54) **PREFORME FIBREUSE COMPRENANT DES REPERES TEXTILES**
FASERVORFORMLING MIT TEXTILEN MARKERN
FIBRE PREFORM CONTAINING TEXTILE MARKERS

(30) Priorité: 31.08.2022 FR 2208703
(43) Date de publication de la demande: 09.07.2025
(73) Titulaire: Safran Ceramics, 33185 Le Haillan (FR)
(72) Inventeur: PLANCKEEL, Aline, 77550 MOISSY-CRAMAYEL (FR); LEFEBVRE, Marie, 77550 MOISSY-CRAMAYEL (FR); ETCHART-SALAS, Ramuntxo, 77550 MOISSY-CRAMAYEL (FR); CARLIN, Maxime François Roger, 77550 MOISSY-CRAMAYEL (FR)
(74) Mandataire: Cabinet Beau de Loménie
(86) Numéro de dépôt international: PCT/FR2023/051311
(87) Numéro de publication internationale: WO 2024/047313

(56) Documents cités:
- FR-A1- 3 096 375
- US-A1- 2007 092 379
- US-A1- 2010 173 137

## Description

### Domaine Technique

L'invention concerne le domaine des matériaux composites et plus précisément des préformes fibreuses pour la fabrication de ces matériaux ou encore les procédés de fabrication de telles préformes, ou de tels matériaux.

### Technique antérieure

Les matériaux composites présentent un intérêt technologique croissant et connaissent une grande variété d'utilisations ces dernières années.

En particulier, les matériaux composites à matrice organique (CMO) et les matériaux composites à matrice céramique (CMC) viennent en remplacement des pièces en matériau métallique dans certaines parties des turbomachines. Leur utilisation contribue à optimiser les performances des aéronefs notamment par l'amélioration du rendement de la turbomachine et la baisse de la masse globale de la turbomachine, réduisant de manière significative les émissions nocives pour l'environnement (CO, CO₂, NOₓ ...).

La préparation de tels matériaux se fait généralement par la formation d'une matrice au sein d'une préforme fibreuse. Les propriétés mécaniques de la pièce finale dépendent non seulement de la composition de la préforme et de la matrice, mais également du tissage choisi pour la préforme, et de l'orientation des fibres dans la préforme.

C'est pourquoi la préforme fibreuse ne peut pas être disposée aléatoirement dans les procédés de fabrication de la pièce. Notamment, il est souhaitable que la préforme puisse être placée précisément dans un conformateur ou dans un outillage de densification. Ainsi, il est possible de repérer certaines zones particulières ou des directions de la préforme, ce qui assure que les propriétés mécaniques de la pièce finale soient celles attendues.

Habituellement, une direction particulière de la préforme est repérée par un fil traceur tissé dans cette direction et dont l'apparence est différente des fils du reste de la préforme. Cela permet un repérage visuel d'une direction particulière de la préforme, ce qui facilite le positionnement correct de la préforme dans l'outillage. Pour que l'apparence des fils traceurs soit différente du reste de la préforme, les fils traceurs sont d'une nature différente des autres fils de la préforme. Par exemple, pour une préforme en fibres de carbure de silicium, les fils traceurs sont généralement choisis comme étant des fils d'alumine.

Par exemple les documents US2007/092379 et FR 3 096 375 illustrent de tels procédés.

Si cette solution est satisfaisante dans l'ensemble, il a toutefois été observé que les fils traceurs, du fait de leur nature différente, ne présentent pas le même comportement que le reste de la préforme lors de la formation de la matrice.

Par exemple, il a pu être observé que la matrice ne se formait pas aussi bien dans la zone autour du fil traceur que sur le reste de la surface de la préforme. Cette mauvaise formation de la matrice à proximité du fil traceur se traduit par une absence de matrice ou une matrice présente en faible épaisseur autour du fil, ce qui peut conduire à la non-conformité de la pièce en matériau composite notamment puisqu'une zone comportant moins de matrice peut conduire à une zone n'ayant pas les propriétés souhaitées.

D'une part, il est nécessaire de disposer d'une préforme dont il est possible de connaître l'orientation afin qu'elle puisse être placée précisément dans un conformateur ou un outillage de densification. D'autre part, il demeure un besoin pour une préforme dénuée des désavantages décrits ci-dessus et associés à l'utilisation de fils traceurs en zone utile.

### Exposé de l'invention

L'invention vise précisément à répondre à ce besoin.

Pour cela, selon un premier de ses aspects, l'invention propose une préforme fibreuse pour la fabrication d'une pièce en matériau composite, la préforme fibreuse présentant un tissage tridimensionnel comprenant une pluralité de couches de fils de trame et une pluralité de couches de fils de chaîne s'étendant dans une direction perpendiculaire à la direction des fils de trame, dans laquelle chaque fil de trame lie des fils de chaîne de plusieurs couches, les fils de trame et les fils de chaîne présentant une première composition, la préforme fibreuse comprenant une zone utile s'étendant entre deux zones de bords,
la préforme fibreuse étant caractérisée en ce qu'elle comprend en outre au moins deux fils traceurs tissés dans une même direction de trame ou de chaîne, et appartenant à deux couches de fils de trame ou de fils de chaîne différentes, chacun présent dans une zone de bord distincte, les fils traceurs présentant une deuxième composition, différente de la première composition, chaque fil traceur réalisant à la surface de la préforme fibreuse au moins un repère textile, un repère textile étant réalisé par l'apparition en surface de la préforme du fil traceur.

La préforme de l'invention présente plusieurs avantages.

Le fil traceur n'est présent que dans les zones de bords de la préforme. De la sorte, la zone utile de la préforme ne comprend pas de fils traceurs, et ainsi, la consolidation et/ou la densification de la préforme par la matrice ne sont pas affectées par la présence de ce fil traceur.

Cependant, il reste possible de repérer une direction particulière de la préforme, en alignant les deux repères textiles formés respectivement par le premier fil traceur et le deuxième fil traceur.

Il est rappelé que la consolidation s'entend comme une étape de densification partielle de la préforme fibreuse, qui permet de lui conférer une rigidité suffisante pour qu'elle puisse tenir en forme, sans besoin d'élément extérieur de support.

La quantité de matrice présente dans la préforme après l'étape de consolidation est toutefois inférieure à la quantité de matrice souhaitée dans la pièce finale.

La densification de la préforme s'entend comme l'étape au cours de laquelle la matrice est introduite dans la préforme fibreuse en une quantité suffisante pour former la pièce finale.

Dans un mode de réalisation, la consolidation peut être réalisée par infiltration chimique en phase vapeur (ou CVI pour l'acronyme en langue anglaise « chemical vapour infiltration »).

Dans un mode de réalisation, la densification de la préforme peut être réalisée par infiltration de silicium à l'état fondu (ou MI pour l'acronyme en langue anglaise « melt-infiltration ») ou par infiltration chimique en phase vapeur (ou CVI).

Dans la présente demande, on nommera zone utile d'une préforme la zone textile qui formera effectivement la préforme fibreuse de la pièce finale.

En effet, de manière classique dans un procédé de préparation d'une pièce en matériau composite, une surface plus grande de préforme que celle strictement nécessaire pour réaliser la pièce souhaitée est tissée, éventuellement consolidée, puis densifiée par la matrice. La pièce est enfin usinée aux dimensions finales souhaitées dans cette préforme densifiée de plus grandes dimensions. C'est au cours de cette étape finale d'usinage que les zones de bords de la préforme sont enlevées.

De manière alternative, la préforme peut être consolidée, puis usinée à sa forme finale, avant d'être densifiée par la matrice.

En tout état de cause, l'invention permet de disposer d'une préforme dans laquelle la zone utile est dépourvue de fils traceurs, et donc, dont la pièce finale ne comprend pas de zones peu ou mal densifiées par la matrice.

Néanmoins, puisque les fils traceurs sont présents au moment où la préforme fibreuse est disposée dans le conformateur ou dans l'outillage de densification, ils permettent de repérer une direction particulière de la préforme fibreuse qui peut passer dans la zone utile de la préforme en alignant les deux repères textiles.

Dans un mode de réalisation particulier où les repères textiles du premier et du deuxième fils traceurs sont réalisés au même moment de tissage, l'alignement des deux repères textiles permet de repérer facilement la direction perpendiculaire à la direction de tissage des fils traceurs.

Ainsi, si les fils traceurs sont présents en chaîne, et que les repères sont formés par passage des deux fils traceurs au-dessus de la même couche de fils de trame, l'alignement des deux repères textiles permet de repérer la direction de trame.

Inversement, si les fils traceurs sont présents en trame, et que les repères sont formés par passage des deux fils traceurs au-dessus de la même couche de fils chaîne, l'alignement des deux repères textiles permet de repérer la direction de chaîne.

Dans un mode réalisation, le repère textile formé par le fil traceur peut être un genou textile. Le genou textile est un motif de tissage dans lequel aucun flotté n'est réalisé avec le fil traceur, c'est-à-dire que ce dernier passe au-dessus d'un unique fil de surface.

Pour former un genou textile, le fil traceur est présent dans l'intérieur de la préforme avant le repère textile, il remonte depuis l'intérieur de la préforme jusqu'à la surface pour former le repère textile en passant au-dessus d'un fil de surface, puis replonge dans la profondeur de la préforme juste après le repère textile.

Ce mode de réalisation permet une plus grande précision dans la direction particulière repérée par l'alignement de deux repères textiles.

En effet, la direction particulière de la préforme qui est repérée par l'alignement de deux repères textiles est plus précisément définie lorsque les repères textiles sont petits.

Dans un mode de réalisation, deux repères textiles sont espacés d'au moins 2 cm.

Ce mode de réalisation permet un meilleur repérage des repères textiles.

En effet, les repères textiles sont d'autant plus visibles que les fils traceurs sont peu présents en surface, car le contraste avec les autres fils de la préforme est alors plus marqué.

Dans un mode de réalisation, les fils de la première composition sont en carbure de silicium.

Dans un mode de réalisation, les fils de la deuxième composition, c'est-à-dire les fils traceurs, sont des fils d'alumine.

Ce mode de réalisation permet d'avoir un fil traceur céramique, résistant aux traitements que voit la préforme lors du procédé de préparation de la pièce.

En outre, les fils d'alumine permettent un bon repérage visuel de ces derniers comparativement aux fils utilisés pour les préformes fibreuses de matériaux composites, notamment les fils de carbure de silicium.

Dans un mode de réalisation, un même fil traceur peut former plusieurs repères textiles dans la direction de tissage du fil traceur.

Dans ce mode de réalisation, la direction de tissage du fil traceur est alors aisément repérable par l'alignement de plusieurs repères textiles formés par le même fil traceur.

Selon un autre de ses aspects, l'invention concerne un procédé de fabrication d'une préforme telle qu'elle est décrite ci-dessus et comprenant une zone utile s'étendant entre deux zones de bords, lequel comprend un tissage tridimensionnel d'une pluralité de couches de fils de trame et une pluralité de couches de fils de chaîne s'étendant dans une direction perpendiculaire à la direction des fils de trame, les fils de trame et les fils de chaîne présentant une première composition, le procédé étant caractérisé en ce qu'il comprend en outre au moins une étape d'insertion de deux fils traceurs dans une même direction de trame ou de chaîne, les fils traceurs étant chacun tissés dans une zone de bord distincte, les fils traceurs ayant une deuxième composition différente de la première composition, le procédé comprenant en outre au moins une opération de remontée de chacun des fils traceurs pour former au moins un repère textile par fil traceur à la surface de la préforme.

Dans un mode de réalisation, l'opération de remontée des fils traceurs est une étape d'inversion textile ponctuelle entre un fil de première composition de surface et un fil traceur afin de former un genou textile.

Selon un autre de ses aspects, l'invention concerne un procédé de fabrication d'une pièce en matériau composite comprenant au moins une étape de disposition d'une préforme telle que décrite ci-dessus dans un outillage au cours de laquelle une ou plusieurs directions particulières de la préforme repérées par les repères textiles de la préforme sont alignées dans une ou plusieurs directions particulières de l'outillage ; une étape de densification de la préforme par une matrice ; et une étape d'usinage pour enlever les zones de bord de la préforme fibreuse.

Les inventeurs ont constaté qu'un tel procédé permettait simplement d'utiliser les mêmes outillages que ceux développés précédemment et dans lesquels il est prévu de disposer la préforme selon une direction particulière, tout en évitant les inhomogénéités d'imprégnation causées par la présence des fils traceurs.

En effet, repérer la direction particulière de la préforme, ne nécessite pas dans les préformes décrites ci-dessus la présence physique d'un fil traceur dans la zone utile. Les fils traceurs sont présents dans les zones de bords, et c'est l'alignement des repères textiles qu'ils forment qui permet de repérer la direction particulière de la préforme.

La présence des fils traceurs dans les zones de bords de la préforme de l'invention perturbent certes localement la densification, mais seulement dans les zones de bords qui ne sont plus présentes dans la pièce finale. On dispose ainsi d'un procédé de mise en place aussi simple que les procédés de l'art antérieur, mais qui permet d'obtenir des pièces dans lesquelles l'homogénéité de la densification de la préforme est assurée.

Dans un mode de réalisation, l'outillage d'un procédé de fabrication d'une préforme fibreuse est un conformateur, et le procédé comprend en outre une étape de consolidation, avant l'étape de densification.

Dans un tel mode de réalisation, une direction particulière de la préforme fibreuse peut être disposée dans une direction particulière dudit conformateur.

Il est à noter que l'étape de consolidation reste toutefois optionnelle. En effet, dans certains modes de réalisation la préforme ne nécessite pas de consolidation et peut être directement disposée dans un outillage de densification.

Dans un mode de réalisation, l'outillage de densification comprend une direction particulière qui est alignée avec une direction particulière de la préforme fibreuse.

Dans un mode de réalisation, l'étape de consolidation peut être réalisée par infiltration chimique en phase vapeur (ou CVI pour l'acronyme en langue anglaise « chemical vapour infiltration »).

Dans un mode de réalisation, l'étape de densification de la préforme fibreuse est réalisée par infiltration liquide (ou MI pour l'acronyme en langue anglaise « melt-infiltration »), par exemple par infiltration liquide de silicium fondu.

Par exemple, dans un tel mode de réalisation, une partie de la préforme fibreuse est mise en contact d'un bain de silicium fondu, lequel infiltre alors la préforme fibreuse par capillarité.

Dans un mode de réalisation, l'étape d'usinage a lieu après l'étape de densification de la préforme fibreuse.

Dans un autre mode de réalisation, et lorsqu'une étape de consolidation est présente, l'étape d'usinage peut avoir lieu après l'étape de consolidation et avant l'étape de densification.

### Brève description des dessins

[Fig. 1] La figure 1 représente de manière schématique une préforme de l'art antérieur.
[Fig. 2] La figure 2 représente de manière schématique une préforme selon l'invention.
[Fig. 3] La figure 3 représente schématiquement une préforme tissée dans un mode de réalisation de l'invention.
[Fig. 4] La figure 4 représente schématiquement une préforme tissée dans un mode de réalisation de l'invention.
[Fig. 5] La figure 5 représente schématiquement une préforme tissée dans un mode de réalisation de l'invention.
[Fig. 6] La figure 6 représente schématiquement la disposition d'une préforme dans un conformateur, dans un mode de réalisation de l'invention.

### Description des modes de réalisation

L'invention est à présent décrite au moyen de figures qui ne doivent pas être interprétées de manière limitative et qui ne sont présentes qu'à des fins illustratives.

Dans toute la demande, conformément à la convention habituelle du tissage, les directions de tissage sont appelées trame et chaîne. Il est indiqué que l'invention et ses effets techniques sont aussi facilement obtenus si les directions de trame et de chaîne sont inversées, c'est-à-dire si dans toute la demande, toutes les occurrences de « trame » sont remplacées par « chaîne » et vice-versa.

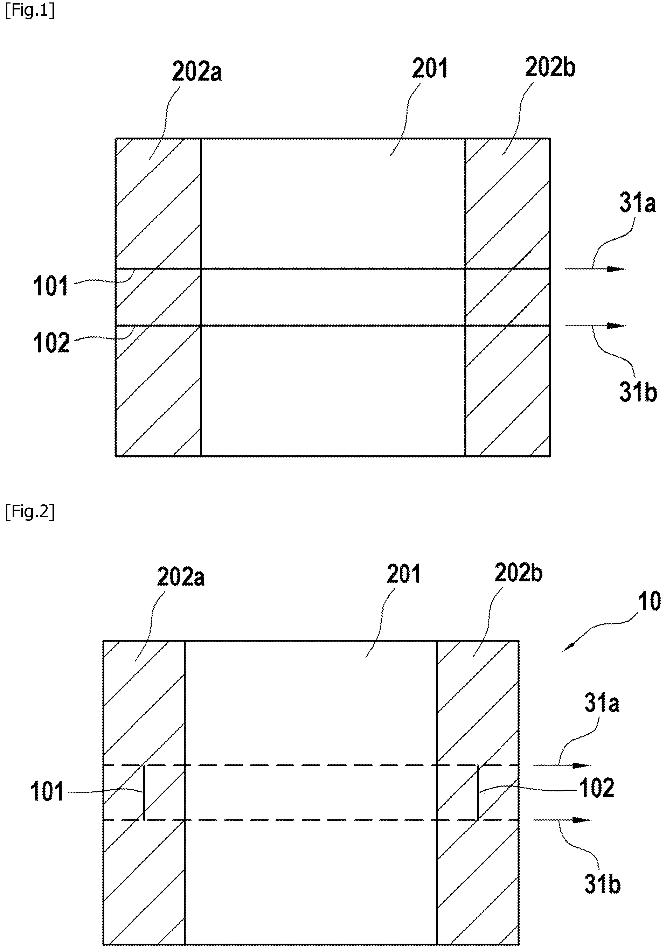

La figure 1 décrit une préforme fibreuse de l'art antérieur.

Elle comprend une zone utile 201 présente entre deux zones de bord 202a et 202b.

Deux directions particulières de la préforme fibreuse de l'art antérieur 31a et 31b sont repérables grâce à la présence de deux fils traceurs 101 et 102.

Néanmoins, et comme décrit plus haut, pour être visibles, ces fils traceurs sont d'une nature différente du reste des fils de la préforme fibreuse. Puisqu'ils sont présent en zone utile, les fils traceurs peuvent causer localement une mauvaise imprégnation de la préforme fibreuse, qui nuit aux caractéristiques mécaniques de la pièce finale.

La figure 2 représente une préforme fibreuse 10 selon un premier mode de réalisation.

La préforme 10 comprend deux fils traceurs 101 et 102, qui ne sont pas présents dans la zone utile, et qui apparaissent localement à la surface de la préforme 10.

Les directions particulières 31a et 31b de la préforme restent néanmoins aisément identifiables, en alignant les repères textiles formés par les fils traceurs 101, 102.

Sur la figure 2, les repères textiles sont suffisamment longs pour repérer les deux directions particulières 31a, 31b en alignant chaque extrémité d'un repère textile avec l'extrémité correspondante de l'autre repère textile, mais cela ne doit pas être considéré comme limitatif de l'invention.

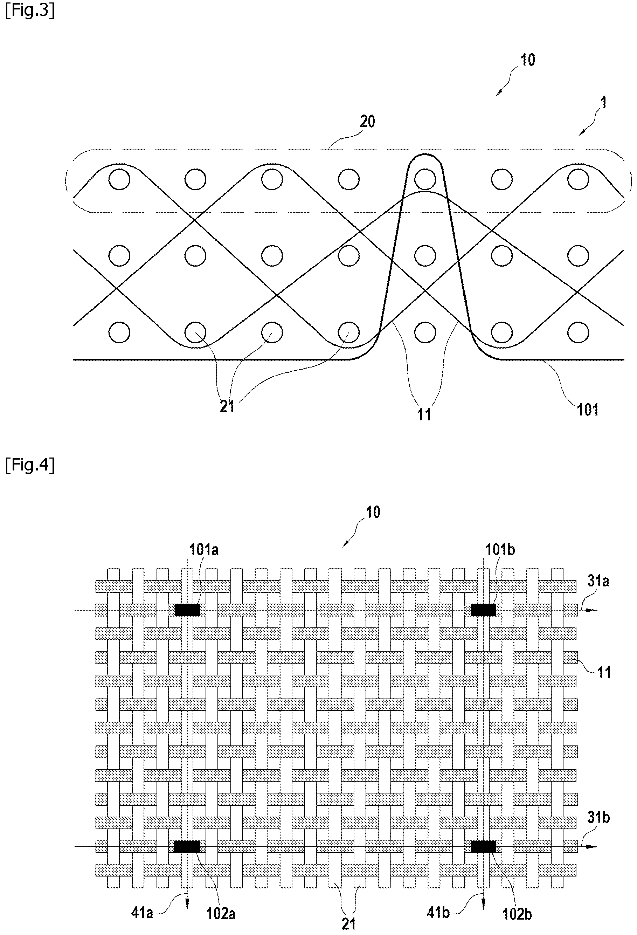

La figure 3 représente une préforme fibreuse 10 comprenant une pluralité de fils de trame 11 et une pluralité de fils de chaine 21 d'une première composition.

Dans la représentation de la figure 3, les fils de chaîne 21 s'étendent perpendiculairement à la représentation et c'est pourquoi ils sont représentés par leurs sections circulaires.

Les fils de chaîne 21 formant la couche de surface 20 sont également repérés entourés en pointillés sur la figure 3.

Les préformes de l'invention comprennent un tissage tridimensionnel. Ainsi et comme cela est représenté sur la figure 3, un même fil de trame 11 lie des fils de chaîne 21 appartenant à plusieurs couches distinctes de fils de chaîne. De la sorte, la préforme présente une relative solidité dans la direction perpendiculaire à sa surface. En particulier, les préformes fibreuses présentant un tissage tridimensionnel sont plus résistantes au délaminage que des préformes qui ne comprennent pas de tissage tridimensionnel.

Par "tissage tridimensionnel" ou "tissage 3D", on entend ici un mode de tissage par lequel certains au moins des fils de chaîne lient des fils de trame sur plusieurs couches de trame comme par exemple un "tissage interlock". Par "tissage interlock", on entend ici une armure de tissage 3D dont chaque couche de chaîne lie plusieurs couches de trames avec tous les fils de la même couche de chaîne ayant le même mouvement dans le plan de l'armure.

Dans la préforme représentée les fils de trame 11 lient trois couches de fils de chaîne. Il n'est toutefois pas exclu que les fils de trame 11 lient plus de trois couches de fils de chaine 21. Egalement, la préforme peut ou non comprendre des fils de trame non représentés en figure 3, qui lient moins de couches de fils de chaîne, voire qui passent entre les fils de chaîne 21 sans les lier. Ces derniers sont alors des fils de trame non liants et augmentent la résistance mécanique de la préforme fibreuse.

La figure 3 représente en outre un fil traceur 101, d'une composition différente des fils de trame 11 et de chaîne 21. Le fil traceur 101 est présent en profondeur de la préforme, sauf en un unique point du tissage où il est présent en surface.

Ce point du tissage où le fil traceur passe en surface de la préforme forme un repère textile.

En effet, le contraste visuel créé par la présence du fil traceur 101 en surface de la préforme permet un repérage aisé du repère textile.

En outre, il faut noter que la figure 3 représente une préforme ne comprenant que 3 couches de fils de chaîne 21 mais cette représentation est schématique et ne représente que les quelques couches de fils de chaîne supérieures d'une préforme. Une préforme réelle peut comprendre un nombre de couche de fils de chaîne bien plus grand, qui est déterminé en fonction de l'épaisseur souhaitée pour la préforme 10. En particulier, le fil traceur 101 représenté sur la figure 3 ne doit pas être compris comme étant à la surface de la préforme, mais bien entre plusieurs couches de chaine de cette dernière.

Dans un mode de réalisation, le fil traceur est présent en profondeur de la préforme comme un fil non-liant, c'est-à-dire qu'il n'est pas présent en surface, et qu'il ne tisse pas les fils de chaîne, sauf pour la réalisation des repères textiles. Dans un autre mode de réalisation, le fil traceur peut être un fil liant, qui vient s'intervertir avec un fil de la première composition présent en surface au moment de la formation d'un repère textile.

Dans un mode de réalisation, le fil traceur 101 peut aussi prendre la place d'un fil liant de la préforme, en s'assurant toutefois que ledit fil de la préforme ne passait pas en surface, et le fil traceur sera sorti de la profondeur de la préforme pour la formation des repères textiles.

Dans un mode de réalisation, le fil traceur 101 reste présent à l'intérieur de la préforme dans toute la préforme ce qui rend plus aisé le tissage, c'est-à-dire qu'il n'est pas extrait de la préforme 10 après la formation des repères textiles 101a, 101b, 102a ou 102b. Néanmoins, puisqu'il est présent dans les zones de bords 202a, 202b et non la zone utile 201 de la préforme, il n'est pas nécessaire de prendre de précautions particulière pour que ce dernier ne perturbe pas la densification de la préforme.

Dans un mode de réalisation, deux repères textiles 101a, 101b, 102a, 102b sont espacés d'au moins 2 cm.

La figure 4 représente de manière schématique la préforme 10 vue du dessus.

Comme cela vient d'être décrit en lien avec la figure 3, toute la préforme est composée de fils de trame 11 et de fils de chaîne 21 d'une première composition, à l'exception de fils traceurs 101 d'une deuxième composition.

Les fils traceurs sont quant à eux d'une deuxième composition, ayant une apparence visuelle différente des fils de la première composition 11, 21. Ainsi, lorsque le fil traceur est présent en surface de la préforme, cela créé des repères textiles 101a, 101b, 102a, 102b, qu'il est possible de repérer à l'œil nu.

Dans un mode de réalisation, le fil traceur 101, 102 est présent en profondeur de la préforme, sauf au moment de la réalisation des repères textiles.

La préforme 10 comprend deux fils traceurs 101, 102 distincts, appartenant à deux couches de fils de trame ou de chaîne différentes. Le premier fil traceur permet la formation des repères 101a et 101b, tandis que le second fil traceur forme les repères 102a et 102b.

Comme représenté sur la figure 4, les repères textiles 101a, 101b, 102a, 102b permettent de repérer des directions particulières 31a, 31b, 41a, 41b de la préforme 10.

Dans un mode de réalisation, le même fil traceur 101 peut servir à la création de plusieurs repères textiles 101a, 101b ou 102a, 102b, pourvu qu'il ne soit pas présent en surface de la préforme entre deux repères textiles. Dans un tel mode de réalisation, les deux fils traceurs 101, 102 permettent d'une part de repérer une direction particulière 41a, 41b par l'alignement d'un repère textile appartenant à chacun des fils traceurs 101, 102, et d'autre part de repérer la direction de tissage des fils traceurs 101, 102 par l'alignement de deux repères textiles d'un même fil traceur 31a, 31b.

L'alignement de deux repères textiles, formés par deux fils traceurs différents, 101a et 102a ou 101b et 102b, permet de repérer des directions particulières de la préforme 41a, 41b, sans nécessiter d'avoir un fil entièrement visible dans cette direction.

La présence de deux fils traceurs 101 dans la direction de trame permet de repérer une direction particulière différente de la direction de tissage du fil traceur 101.

Dans un mode de réalisation, la direction particulière repérée par les repères textiles 101a, 101b, 102a, 102b de deux fils traceurs 101 distincts peut être la direction de trame ou de chaîne.

Toutefois, l'invention n'est pas limitée à ce mode de réalisation, et le choix de l'emplacement des repères textiles 101a, 101b, 102a, 102b permet de repérer d'autres directions particulières.

Les figures 3 et 4 expliquent comment le fil traceur 101 permet de former un repère textile 101a, 101b, 102a, 102b en surface d'une préforme et comment ces repères textiles 101a, 101b, 102a, 102b permettent de repérer une ou plusieurs directions particulières.

Dans un autre mode de réalisation, le fil traceur 101 peut toutefois être introduit dans la préforme au cours du tissage. Par exemple, un fil traceur 101 peut être introduit dans la préforme 10 à un point de déliaison de la préforme.

Il faut noter que les figures 3 et 4 sont schématiques d'une préforme tissée, et que cette dernière peut présenter un tissage tridimensionnel de toute nature.

Différentes armures de tissage tridimensionnel peuvent être utilisées, par exemple, la préforme tissée peut être une préforme tissée interlock, multi-satin ou multi-toile, par exemple, comme décrit dans le document WO 2006/136755.

Dans un mode de réalisation, la préforme peut être une préforme d'une pièce aéronautique, par exemple une préforme d'aube de turbomachine, une préforme d'anneau de turbomachine ou une préforme de distributeur.

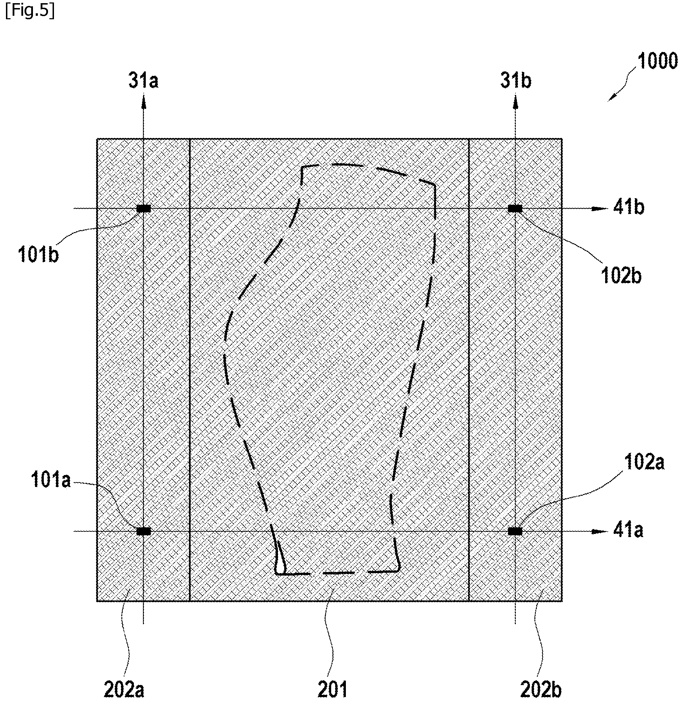

La figure 5 représente une préforme fibreuse 1000 de l'invention, laquelle comprend deux zones de bord 202a 202b et une zone utile 201.

Pour aider à la compréhension, une aube de turbomachine pouvant être formée dans la zone utile 201 est figurée en pointillés.

Comme représenté, la préforme 1000 comprend des repères textiles 101a, 101b, 102a, 102b permettent de repérer des directions particulières 31a, 31b, 41a et 41b.

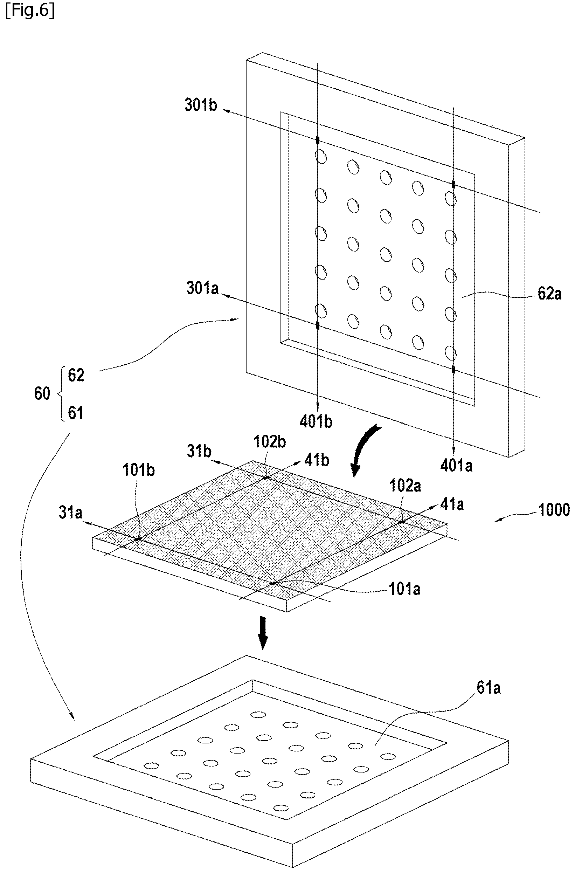

La figure 6 représente schématiquement un procédé de disposition d'une préforme 1000 dans un outillage, ici un conformateur 60.

Le conformateur 60 comprend une première 61 et une deuxième partie de conformateur 62.

Dans un mode de réalisation, la disposition de la préforme 1000 dans la cavité du conformateur 60, comprend une étape d'alignement des directions particulières de la préforme fibreuse 31a, 31b, 41a, 41b repérées par les repères textiles 101a, 101b, 102a, 102b avec des directions particulières du conformateur 301a, 301b, 401a et 401b.

Cette disposition particulière assure que l'ensemble des étapes de préparation de la pièce finale en matériau composite soit réalisé avec des préformes orientées selon une direction particulière, choisie pour permettre l'obtention des propriétés mécaniques attendues dans la pièce finale.

La description a été faite pour un procédé qui comprend une étape de consolidation et les avantages ont été discutés pour la disposition d'une préforme dans un conformateur, mais il est à noter que celle-ci n'est pas indispensable, et que les avantages techniques des préformes qui ont été décrites permettraient de les disposer, en repérant leurs directions particulières 31a, 31b, 41a, 41b, dans des outillages de densification plutôt qu'un conformateur 60.

## Revendications

1. Préforme fibreuse (10) pour la fabrication d'une pièce en matériau composite, la préforme fibreuse présentant un tissage tridimensionnel comprenant une pluralité de couches de fils de trame et une pluralité de couches de fils de chaîne s'étendant dans une direction perpendiculaire à la direction des fils de trame, dans laquelle chaque fil de trame lie des fils de chaîne de plusieurs couches, les fils de trame et les fils de chaîne présentant une première composition, la préforme fibreuse comprenant une zone utile (201) s'étendant entre deux zones de bords (202a, 202b),
la préforme fibreuse comprenant en outre au moins deux fils traceurs (101, 102) tissés dans une même direction de trame ou de chaîne, et appartenant à deux couches de fils de trame ou de fils de chaîne différentes, les fils traceurs présentant une deuxième composition, différente de la première composition, chaque fil traceur réalisant à la surface de la préforme fibreuse au moins un repère textile, un repère textile étant réalisé par l'apparition en surface de la préforme du fil traceur,
la préforme étant **caractérisée en ce que** chaque fil traceur est présent dans une zone de bord distincte.

2. Préforme (10, 1000) selon la revendication 1, dans laquelle deux repères textiles (101a, 101b, 102a, 102b) sont espacés d'au moins 2 cm.

3. Préforme (10, 1000) selon l'une quelconque des revendications 1 à 2, dans laquelle les fils de la première composition sont en carbure de silicium.

4. Préforme (10, 1000) selon l'une quelconque des revendications 1 à 3, dans laquelle les fils traceur de la deuxième composition sont des fils d'alumine.

5. Préforme (10, 1000) selon l'une quelconque des revendications 1 à 4, dans lequel les repères textiles (101a, 101b, 102a, 102b) formé par le fil traceur (101, 102) sont des genoux textiles.

6. Procédé de fabrication d'une préforme (10, 1000) selon l'une quelconque des revendications 1 à 5, et comprenant une zone utile (201) s'étendant entre deux zones de bords (202a, 202b), lequel comprend un tissage tridimensionnel d'une pluralité de couches de fils de trame (11) et une pluralité de couches de fils de chaîne (12) s'étendant dans une direction perpendiculaire à la direction des fils de trame, les fils de trame et les fils de chaîne présentant une première composition, le procédé étant **caractérisé en ce qu'**il comprend en outre au moins une étape d'insertion de deux fils traceurs (101,102) dans une même direction de trame ou de chaîne, les fils traceurs étant chacun tissés dans une zone de bord distincte, les fils traceurs ayant une deuxième composition différente de la première composition, le procédé comprenant en outre au moins une opération de remontée de chacun des fils traceurs pour former au moins un repère textile (101a, 101b, 102a, 102b) par fil traceur à la surface de la préforme.

7. Procédé de fabrication d'une pièce en matériau composite comprenant au moins une étape de disposition d'une préforme (10, 1000) selon l'une des revendications 1 à 5 dans un outillage (60) au cours de laquelle une ou plusieurs directions particulières (31a, 31b, 41a, 41b) de la préforme repérées par les repères textiles de la préforme (101a, 101b, 102a, 102b) sont alignées dans une ou plusieurs directions particulières de l'outillage (301a, 301b, 401a, 401b) ; une étape de densification de la préforme ; et une étape d'usinage pour enlever les zones de bord de la préforme fibreuse.

8. Procédé de fabrication d'une pièce en matériau composite selon la revendication 7, dans lequel l'outillage est un conformateur, et le procédé comprend en outre une étape de consolidation, avant l'étape de densification.

9. Procédé de fabrication d'une pièce en matériau composite selon la revendication 7 ou 8, dans lequel l'étape de densification de la préforme est réalisée par infiltration liquide de silicium fondu ou par infiltration chimique en phase vapeur.

## Patentansprüche

1. Faservorform (10) für die Herstellung eines Teils aus Verbundmaterial, wobei die Faservorform eine dreidimensionale Verwebung aufweist, die eine Vielzahl von Schichten von Schussfäden und eine Vielzahl von Schichten von Kettfäden umfasst, die sich in einer Richtung senkrecht auf die Richtung der Schussfäden erstrecken, wobei jeder der Schussfäden Kettfäden aus mehreren Schichten verbindet, wobei die Schussfäden und die Kettfäden eine erste Zusammensetzung aufweisen, wobei die Faservorform eine Nutzzone (201) umfasst, die sich zwischen zwei Randzonen (202a, 202b) erstreckt,
wobei die Faservorform ferner zumindest zwei Kennfäden (101, 102) umfasst, die in einer selben Schuss- oder Kettrichtung eingewebt sind und zu zwei verschiedenen Schichten von Schussfäden oder Kettfäden gehören, wobei die Kennfäden eine zweite Zusammensetzung aufweisen, die sich von der ersten Zusammensetzung unterscheidet, wobei jeder Kennfaden an der Oberfläche der Faservorform zumindest eine textile Markierung verwirklicht, wobei eine textile Markierung durch das Aufscheinen des Kennfadens an der Oberfläche der Vorform verwirklicht wird, wobei die Vorform **dadurch gekennzeichnet ist, dass** jeder Kennfaden in einer unterschiedlichen Randzone vorliegt.

2. Vorform (10, 1000) nach Anspruch 1, wobei zwei textile Markierungen (101a, 101b, 102a, 102b) um zumindest 2 cm voneinander beabstandet sind.

3. Vorform (10, 1000) nach einem der Ansprüche 1 bis 2, wobei die Fäden der ersten Zusammensetzung aus Siliziumkarbid bestehen.

4. Vorform (10, 1000) nach einem der Ansprüche 1 bis 3, wobei die Kennfäden der zweiten Zusammensetzung Aluminium-Fäden sind.

5. Vorform (10, 1000) nach einem der Ansprüche 1 bis 4, wobei die textilen Markierungen (101a, 101b, 102a, 102b), die durch den Kennfaden (101, 102) gebildet werden, textile Knickformen sind.

6. Verfahren zur Herstellung einer Vorform (10, 1000) nach einem der Ansprüche 1 bis 5, und umfassend eine Nutzzone (201), die sich zwischen zwei Randzonen (202a, 202b) erstreckt, wobei das Verfahren eine dreidimensionale Verwebung einer Vielzahl von Schichten von Schussfäden (11) und einer Vielzahl von Schichten von Kettfäden (12) umfasst, die sich in einer Richtung senkrecht auf die Richtung der Schussfäden erstrecken, wobei die Schussfäden und die Kettfäden eine erste Zusammensetzung aufweisen,
wobei das Verfahren **dadurch gekennzeichnet ist, dass** es ferner zumindest einen Schritt des Einfügens von zwei Kennfäden (101, 102) umfasst, die in einer selben Schuss- oder Kettrichtung eingewebt sind, wobei die Kennfäden jeweils in eine unterschiedliche Randzone eingewebt sind, wobei die Kennfäden eine zweite Zusammensetzung aufweisen, die sich von der ersten Zusammensetzung unterscheidet, wobei das Verfahren ferner zumindest einen Vorgang des Hochziehens eines jeden der Kennfäden umfasst, um zumindest eine textile Markierung (101a, 101b, 102a, 102b) durch den Kennfaden an der Oberfläche der Vorform zu bilden.

7. Verfahren zur Herstellung eines Teils aus Verbundmaterial, umfassend zumindest einen Schritt der Anordnung einer Vorform (10, 1000) nach einem der Ansprüche 1 bis 5 in einem Formwerkzeug (60), wobei im Zuge dessen eine oder mehrere bestimmte Richtungen (31a, 31b, 41a, 41b) der Vorform, die durch die textilen Markierungen der Vorform (101a, 101b, 102a, 102b) markiert sind, in einer oder mehreren bestimmten Richtungen des Formwerkzeugs (301a, 301b, 401a, 401b) ausgerichtet werden, einen Schritt der Verdichtung der Vorform, und einen Schritt der maschinellen Bearbeitung, um die Randzonen der Faservorform zu entfernen.

8. Verfahren zur Herstellung eines Teils aus Verbundmaterial nach Anspruch 7, wobei das Formwerkzeug ein Konformator ist, und das Verfahren ferner einen Schritt der Kompaktierung vor dem Schritt der Verdichtung umfasst.

9. Verfahren zur Herstellung eines Teils aus Verbundmaterial nach Anspruch 7 oder 8, wobei der Schritt der Verdichtung der Vorform durch flüssige Infiltration von geschmolzenem Silizium oder durch chemische Infiltration in der Dampfphase verwirklicht wird.

## Claims

1. A fiber preform (10) for manufacturing a component made of composite material, the fiber preform exhibiting three-dimensional weaving comprising a plurality of layers of weft filaments and a plurality of layers of warp filaments extending in a direction perpendicular to the direction of the weft filaments, in which each weft filament binds warp filaments of several layers, the weft filaments and the warp filaments having a first composition, the fiber preform having a usable zone (201) extending between two edge zones (202a, 202b),
the fiber preform comprising at least two tracer filaments (101, 102) woven in the one same, weft or warp, direction and belonging to two different layers of weft filaments or warp filaments, the tracer filaments having a second composition, different from the first composition, each tracer filament creating at least one textile marker on the surface of the fiber preform, a textile marker being created by the appearance of the tracer filament on the surface of the preform
said preform being **characterised in that** each tracer filament is present in a distinct edge zone.

2. The preform (10, 1000) according to claim 1, wherein two textile markers (101a, 101b, 102a, 102b) are spaced at least 2 cm apart.

3. The preform (10, 1000) according to any one of claims 1 to 2, wherein the filaments of the first composition are made of silicon carbide.

4. The preform (10, 1000) according to any one of claims 1 to 3, wherein the tracer filaments of the second composition are alumina filaments.

5. The preform (10, 1000) according to any one of claims 1 to 4, wherein the textile markers (101a, 101b, 102a, 102b) formed by the tracer filament (101, 102) are textile knees.

6. A method for manufacturing a preform (10, 1000) according to any one of claims 1 to 5, and having a usable zone (201) extending between two edge zones (202a, 202b), which comprises a three-dimensional weaving of a plurality of layers of weft filaments (11) and a plurality of layers of warp filaments (12) extending in a direction perpendicular to the direction of the weft filaments, the weft filaments and the warp filaments having a first composition,
the method being **characterized in that** it further comprises at least one step of inserting two tracer filaments (101, 102) in the same weft or warp direction, the tracer filaments each being woven in a distinct edge zone, the tracer filaments having a second composition different from the first composition, the method further comprising at least one operation of raising each of the tracer filaments to form at least one textile marker (101a, 101b, 102a, 102b) per tracer filament on the surface of the preform.

7. The method for manufacturing a component made of composite material comprising at least one step of arranging a preform (10, 1000) according to one of claims 1 to 5 in a tool (60) during which one or more particular directions (31a, 31b, 41a, 41b) of the preform identified by the textile markers of the preform (101a, 101b, 102a, 102b) are aligned in one or more particular directions of the tool (301a, 301b, 401a, 401b); a step of densifying the preform; and a machining step to remove the edge zones of the fiber preform.

8. The method for manufacturing a component made of composite material according to claim 7, wherein the tool is a shaper, and the method further comprises a consolidation step, before the densification step.

9. The method for manufacturing a component made of composite material according to claim 7 or 8, wherein the step of densifying the preform is carried out by liquid infiltration of molten silicon or by chemical vapor infiltration.
